# EUROPEAN PATENT SPECIFICATION

(11) **EP 3 663 139 B1**
(45) Date of publication and mention of the grant of the patent: **12.01.2022**
(21) Application number: 18209805.3
(22) Date of filing: 03.12.2018
(51) Int. Cl.: B60R 21/217, B60R 21/201

(54) **METHOD FOR MANUFACTURING AN AIRBAG PACKAGE**
VERFAHREN ZUR HERSTELLUNG EINES AIRBAG-GEHÄUSES
PROCÉDÉ DE FABRICATION D'UN PAQUET DE COUSSIN GONFLABLE

(43) Date of publication of application: 10.06.2020
(73) Proprietor: ALT Technologies B.V., 3565 AK Utrecht (NL)
(72) Inventor: Boots, Maurice Robert Franciscus, 3565 AK Utrecht (NL)
(74) Representative: Nederlandsch Octrooibureau

(56) References cited:
- US-A- 5 553 887
- US-A- 5 645 295
- US-A1- 2018 056 918

## Description

### Technical Field

The invention relates to an airbag package and to a method for manufacturing an airbag package. The invention further relates to an airbag unit and a vehicle including such an airbag unit.

### Background Art

Nowadays, motor vehicles commonly include inflatable airbags that provide protection to the occupants and other road users in the event of an accident. Typically, such airbags are formed from flexible fabrics or plastic materials. The industry calls for pre-formed airbag units that can be easily installed during assembly of the motor vehicle, and preference is given to tightly stowed airbags that occupy very little space in their undeployed rolled/folded configuration. Airbag units of this type have been proposed in which an undeployed airbag is held under compression by an enclosing package. Airbag units with packaging formed of lightweight ductile fabric materials can be made lighter and thinner than previous designs with hard plastic packaging.

Methods for manufacturing airbag packaging from a plastically deformable sheet of fabric precursor material are known from international patent publication WO2018/033343A1. In one method, the package is formed from ductile felt material, with first and second package portions located on opposite sides of a folding line that is composed of apertures and intermediate webs. The first package portion is subjected to heat and pressure, to be formed into a stable three-dimensional shape for accommodating the roll formed on an airbag that is wrapped around an inflator. The second package portion and the webs retain their flexibility, to allow the package to be closed around the airbag roll. This known package needs to be accurately placed between the mould members, before the first package portion is subjected to heat and pressure by a pressing mould. In the method of WO2018/033343A1, errors in positioning of the package portions will have a noticeable impact on the mechanical properties of the resulting airbag package.

It would be desirable to provide a method for manufacturing airbag packaging, which yields a high level of reproducibility and low engineering tolerances for the mechanical characteristics of the resulting airbag package.

The document US 2018/056918 discloses an airbag package, comprising a shell defining an inner compartment for accommodating a rolled-up and/or folded airbag configured to engage the shell along an edge so that the lid covers said compartment; a hinge interconnecting the shell and the lid along a nominal axis, and allowing the lid to pivot about said axis and relative to the shell between opened and closed states. The lid is formed from a sheet of pressed felt, in particular polyester needle felt.

### Summary of Invention

According to a first aspect, there is provided a method for manufacturing an airbag package. The method includes: providing a sheet of precursor material, which is plastically deformable when subjected to heat and/or pressure; placing the sheet between mould parts of a moulding press; forming a shell that defines an inner compartment for accommodating a rolled-up and/or folded airbag; forming a lid configured to engage the shell so that the lid covers said compartment; forming a hinge that interconnects the shell and the lid along a nominal axis, and which allows the lid to pivot about said axis and relative to the shell between opened and closed states, and subjecting the sheet to pressure, thereby integrally forming the shell, the lid, and the hinge, into a continuous (unitary) and self-supporting three-dimensional shape.

The phrase "subjecting the sheet to pressure" is used herein to describe a compression moulding process, i.e. a forming process in which the sheet of plastically deformable precursor material is placed between moulding parts of a press mould, and forced to conform to the shape of the mold as the mould closes. When it closes, the mould parts exert a force distribution directed normal to the sheet, but with spatially varying magnitudes in different portions of the sheet. The resulting pressure distribution urges the sheet into contact with all mold areas, causing portions of the sheet to deform in out-of-plane directions relative to other portions of the sheet. The pressure is maintained until the molding material has cured.

The resulting airbag package is provided with a hinge that is heated and pressed together with the shell and the lid from the same sheet of precursor sheet material, so that a so-called "living hinge" is formed. By integrally forming the shell, the lid, and the hinge in the same pressurization step, the package and its hinge can be manufactured with well-determined and reproducible mechanical properties, which is highly desirable in airbag applications. In addition, it allows the precursor sheet to be integrally heated to a required temperature, before being placed inside the moulding press, thus obviating the need to use a complicated moulding press that includes means for selectively regulating the temperature in different parts of the mould.

The package may be formed from a sheet of ductile fabric material composed of a plurality of polymeric fibres, preferably having good flame retardant properties. Part or all of the fibres may be fused together by applying pressure and/or heat to impart the predetermined stable shape to the package. Preferably, said ductile fabric material is a non-woven fabric material. The sheet of precursor material may for instance consist essentially of felt with flame-retarding properties, for instance polyester needle felt.

In embodiments, the shell defines a rim that is formed as an outwardly projecting peripheral flange along an edge of the compartment, which preferably surrounds the entire compartment. The lid defines a second rim that is also formed as an outwardly projecting peripheral flange, which is configured to engage the rim of the shell in the closed state, so that the lid completely covers the compartment.

In an embodiment, the method further comprises: providing a second sheet of precursor material that is plastically deformable when subjected to predetermined minimum levels of heat and/or pressure, positioning the sheet and second sheet in an at least partially overlapping manner between the mould parts, and simultaneously subjecting the sheet and the second sheet to pressure, so that at least part of the three-dimensional shape obtains a laminated structure. The second sheet of ductile material may be also be a fabric composed of fibres that are fusible by applying pressure and/or heat. Again, this may be a non-woven fabric material consisting essentially of felt (e.g. polyester needle felt).

In embodiments, the method further comprises positioning the second sheet in an overlapping manner with a shell portion of the sheet between the mould parts, so that the shell obtains a laminated structure when the sheet and second sheet are subjected to pressure. The shell of the package forms a base container for accommodating the undeployed airbag, and is designed for fixing the airbag unit to the underlying frame of the vehicle interior component (e.g. the seat frame, doorframe, etc.). The shell benefits from an increased tearing strength that allows the shell to absorb considerable forces generated during airbag deployment.

Alternatively or in addition, the method further comprises positioning the second sheet in an overlapping manner with a rim portion and a second rim portion of the sheet between the mould parts, so that the rim and second rim obtain a laminated structure when the sheet and second sheet are subjected to pressure. The rims are designed for holding the shell and the lid together, with the undeployed airbag enclosed inside. Laminated rims benefit from an increased tearing strength, which protects such rims against rupturing when subjected to the reaction forces from the compressed undeployed airbag.

Alternatively or in addition, the method further comprises positioning the second sheet in an overlapping manner with the sheet between the mould parts while leaving at least a lid portion of the sheet uncovered, so that at least part of the lid retains a single-layered structure when the sheet and second sheet are subjected to pressure. A locally weakened region in the lid increases the likelihood that expansion of the airbag causes the package to rupture and provide an opening in this region, via which the expanding airbag can emerge and deploy.

One or more additional sheets of precursor material may be arranged in an overlapping manner with the first and second sheets. For instance, the package may be formed as a laminate of three sheets of felt. Selected portions of the precursor sheets may be arranged in an overlapping manner (e.g. the shell and rim portions), while other regions remain uncovered (e.g. the lid portion), so that the resulting package obtains tearing strength characteristics that vary in a predetermined step-wise manner in selected regions of the package.

In embodiments, the method comprises: providing a plurality of through holes in a linear sequence along the axis, after the sheet has been subjected to pressure and the hinge has been formed. The holes may for instance be formed through cutting, punching or milling/routing. Alternatively or in addition, a plurality of linear cuts through the sheet may be provided in a linear sequence along the axis, after the sheet has been subjected to pressure and the hinge has been formed. The through holes and/or cuts may be formed with essentially identical sizes and/or shapes, and the distances between the holes and/or cuts along the axis may be essentially identical. In this context, the term "essentially" refers to achievable manufacturing tolerances of plus minus 0,5 millimetre.

The cuts and/or through holes increase the flexibility of the hinge. In addition, the line of cuts and/or holes may serve as a tearing perforation along which the package is locally weakened. This weakening line increases the likelihood that, in the event of collision, the expansion of the airbag causes the package to rupture along the hinge line and allows the expanding airbag to emerge from the package.

Alternatively or in addition, part of the lid may be provided with a perforation line, which forms a trajectory along which the lid is locally weakened to increase the likelihood of rupturing and forming an exit opening for the expanding airbag. The perforation lines in the lid and along the hinge may extend into each other and jointly form a closed trajectory.

A pre-folding groove may be formed in the sheet during moulding, at the same time that pressure is exerted on the sheet and the hinge is formed. This pre-folding groove may be located on one surface side of the sheet, and may extend along and parallel with the axis. In addition, a further pre-folding groove may be formed in the sheet during application of pressure. This further pre-folding groove is located on an opposite surface side of the sheet, and extends along the axis. The pre-folding grooves may be made by exerting excess pressure on the precursor sheet(s) along the line associated with the axis, which is higher than the pressure exerted on the rest of the precursor sheet(s).

The method may further comprise: trimming or cutting edges of the deformed shape that includes the shell, hinge, and lid, and which results from press moulding the precursor sheet. The resulting rims along the edges of the shell and lid can thus be provided with various geometries, and can thus be optimized for a particular fixation technique.

In a second aspect, and in accordance with the advantages and effects described herein above, there is provided an airbag package comprising a shell, a lid, and a hinge. The shell defines an inner compartment for accommodating a rolled-up and/or folded airbag. The lid is configured to engage the shell and cover said compartment. The hinge mechanically connects the shell and the lid along a nominal axis, and allows the lid to pivot about said axis and relative to the shell between opened and closed states. The shell, the lid, and the hinge are interconnected and define a unitary self-supporting three-dimensional shape, which is formed from a sheet of pressed felt. Preferably, the felt is a polyester needle felt.

In embodiments, the shell includes a rim that forms a lateral flange extending along the edge surrounding the compartment, and the lid has a second rim, which also forms a lateral flange, and which is configured to engage the shell along said rim so that the lid covers said compartment. Each of the rims may extend along the entire periphery of the associated shell or lid.

In embodiments, at least part of the package has a laminated structure formed by the sheet and by a second sheet of pressed felt that overlaps the sheet. For instance, one or more of the shell, the rim, and the second rim, may have a laminated structure formed by the sheet and the second sheet. Alternatively or in addition, at least part of the lid retains a single-layered structure formed only by the sheet.

In embodiments, the airbag package further comprises a plurality of though holes arranged in a linear sequence along the axis and the hinge. Preferably, the through holes have essentially identical sizes and shapes, and are arranged at essentially identical mutual distances along the nominal hinge axis.

In embodiments, the airbag package further comprises a pre-folding groove located on one surface side of the hinge, and a further pre-folding groove located on an opposite surface side of the hinge. These pre-folding grooves extend along and parallel with the axis.

In a further embodiment, the shell and the lid both have a thickness Dw near and along the pre-folding grooves, the pre-folding groove has a groove depth D1 relative to an outer surface of the shell and lid, and the further pre-folding groove has a further groove depth D2 relative to an inner surface of the shell and lid. A sum of the groove depths may then comply with ½·Dw ≤ D1+D2 ≤ ¾·Dw.

Alternatively or in addition, the pre-folding groove has a groove width W1 and a groove depth D1 relative to an outer surface of the shell and lid. The groove width and depth may comply with D1 ≤ W1 ≤ 3·D1.

The indicated groove dimensions yield an optimum balance between strength and flexibility of the hinge, when the package is made of press-moulded felt material.

In third and fourth aspects of the invention, and in accordance with the advantages and effects described herein above, there is provided an airbag unit for a motor vehicle safety device, as well as a vehicle provided with such an airbag unit. This airbag unit comprises an inflatable airbag, an inflator device for inflating the airbag, and a package in accordance with the second aspect or manufactured in accordance with the first aspect. The airbag is formed of a flexible material and provided as a rolled and/or folded body that is accommodated in an inner compartment of the package.

### Brief Description of Drawings

Embodiments will now be described, by way of example only, with reference to the accompanying schematic drawings in which corresponding reference symbols indicate corresponding parts. In the drawings, like numerals designate like elements.
Figure 1 shows an airbag device including a package according to an embodiment;
Figure 2a shows a perspective view of a partially opened airbag package according to an embodiment;
Figure 2b shows a perspective view of the airbag package from figure 2a in fully opened state;
Figure 3a schematically shows a perspective view of a precursor sheet for forming the airbag package from figure 2a;
Figures 3b-3d show subsequent stages in a press moulding and shaping method according to an embodiment;
Figures 4a-6b illustrate three embodiments of multi-layered package embodiments;
Figures 7-9 schematically show cross-sections of hinge regions in airbag packages according to embodiments, and
Figure 10 schematically shows a vehicle including an airbag unit according to an embodiment.

The figures are meant for illustrative purposes only, and do not serve as restriction of the scope or the protection as laid down by the claims.

### Description of Embodiments

The following is a description of certain embodiments of the invention, given by way of example only and with reference to the figures.

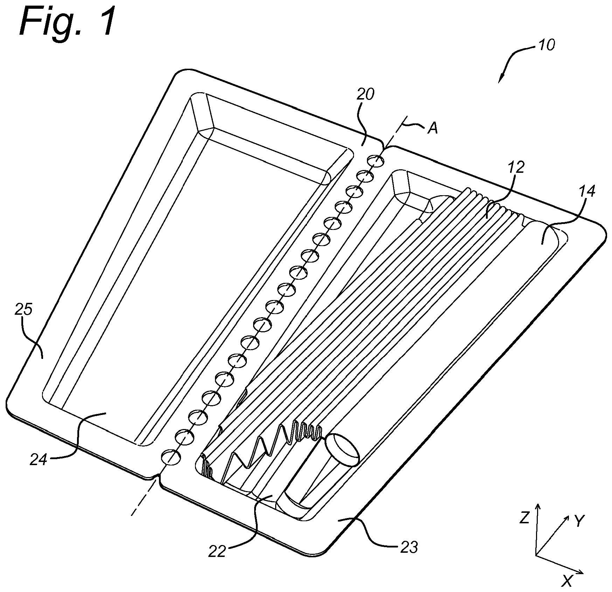

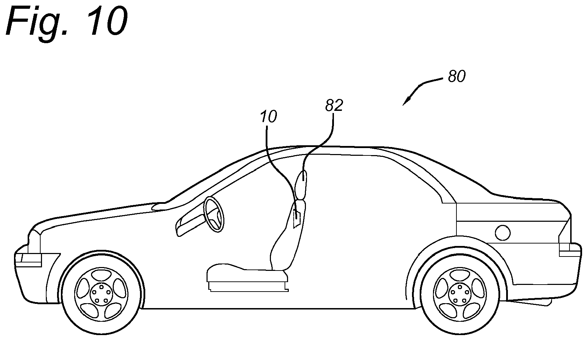

Figure 1 shows an airbag unit 10, which is configured to be installed in the side of a seat 82 of a motor vehicle 80 (see figure 10), and configured to be quickly deployed to form an impact absorbing body between the seat occupant and a side door or panel of the vehicle 80 in the event of a collision. The airbag unit 10 includes an airbag 12, which is formed from a sheet of flexible material, for instance from a plastic fabric, and which is shown in a collapsed state. On an inside, the airbag 12 defines a large inflatable volume for receiving inflating gas from an inflator 14, for instance a gas generator, to which the airbag 12 is connected. The airbag 12 is rolled and/or folded towards the inflator 14 to form a wrap that is accommodated with the inflator 14 inside a protective package 20, suitable for installation in the vehicle. The package 20 provides a cover around the undeployed airbag 12 and inflator 14, which protects the airbag 12 prior to and after installation in the vehicle 80. The package 20 prevents the rolled/folded airbag 12 from becoming distorted, which would adversely affect the manner in which the airbag deploys upon inflation.

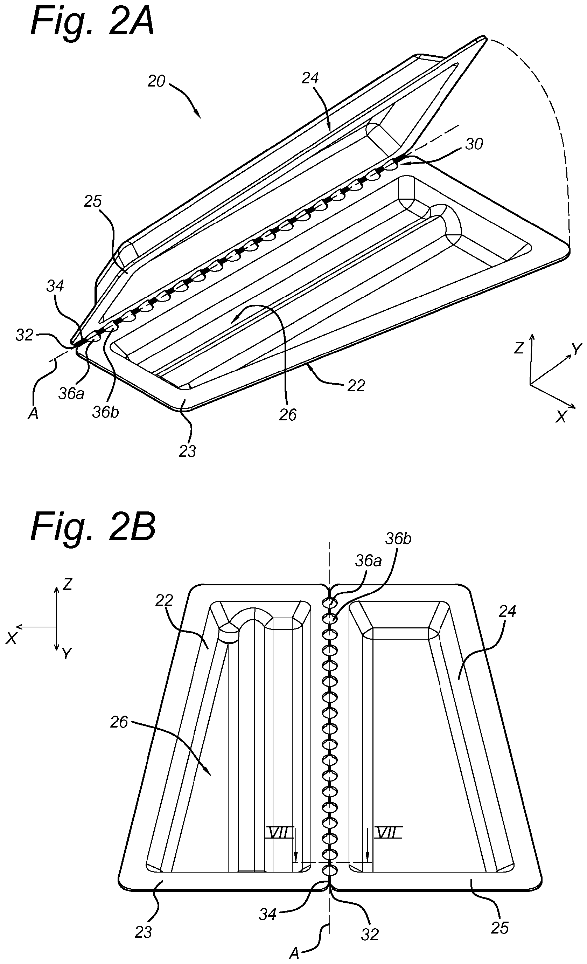

Figures 2a and 2b show perspective views of an exemplary airbag package 20, with figure 2a showing the package 20 in a partially opened state, and figure 2b showing the package 20 in a fully opened state.

The material from which the package 20 is formed consists essentially of non-woven fabric material, which is composed of polymeric fibres that jointly form a felt. In this example, the package material is a polyester (PES) needle felt. Needle felt is produced by known needle techniques in which a needling process is used to entangle and lock together the fibres of the material. The package 20 is integrally formed by heating and pressing a continuous sheet of PES felt in a three-dimensional mould, and cutting out the periphery of the package 20 from the resulting three-dimensional shape, after the package has been removed from the mould. In the final state of the package 20, the felt material may have an areal density of about 1000 grams per square meter (gsm), and a wall thickness of approximately 2 millimetres (apart from recesses and cut-outs that may be locally formed in the package, as discussed herein below).

The package 20 has been formed by press moulding a sheet of needle felt into a self-supporting three-dimensional shape, which includes a shell 22, a lid 24, and a hinge 30. The shell 22 defines an inner compartment 26 for accommodating the folded airbag 12 and optionally the inflator 14. The compartment 26 is bounded by a peripheral rim 23, which is formed by a flange that projects laterally outwards from and surrounds the entire periphery of compartment 26. The lid 24 is also provided with a rim 25, which is formed by another flange that projects laterally outwards from and surrounds the depressed region in the centre of the lid 24. This rim 25 is configured to engage the shell 22 along its rim 23, so that the lid 24 covers and closes off the compartment 26. In this example, each rim 23, 25 extends along a nominal plane, and along the entire periphery of the respective shell 22 or lid 24.

Rim 23 continues into rim 25 at hinge 30. The hinge 30 interconnects the shell 22 and the lid 24 along a nominal pivot axis A, and allows the lid 24 to pivot about this axis A and relative to the shell 22 between opened and closed states.

In the example of figure 2a, the package 20 has an elongated shape, and the hinge 30 is formed alongside longitudinal edges of the shell 22 and the lid 24. The shell 22 has an outer contour with a rounded quadrilateral shape, the lid 24 has a similar but mirror-symmetric outer contour, and the resulting outer contour of the package 20 in opened state has a rounded trapezoidal shape. The hinge 30 is partly formed by a plurality of through holes 36 (36a, 36b), which extend entirely through and open up on both surface sides of the PES felt. In this example, the holes 36 have been formed by punching, after the three-dimensional package shape has been press moulded, and after the pressed shape has been released from the mould. The holes 36 have essentially identical sizes and shapes. In this example, the holes 36 have identical circular shapes with diameters of approximately 8 millimetres. The holes 36 are arranged in a linear sequence along the axis A, at constant mutual distances of approximately 4 millimetres. The holes 36 are applied in such a way that the moulded PES material is weakened locally along the axis A, to facilitate local bending when the shell 22 and the lid 24 are pivoted relative to each other about axis A.

Pre-folding grooves 32, 34 are provided along opposite surfaces of the package 20 in the region associated with the hinge 30. Both the grooves 32, 34 extend along and are parallel with the axis A. The first pre-folding groove 32 is located on an outer side of the package 20, whereas the second pre-folding groove 34 is located on an inner side of the package 20, which is along a surface portion directly opposite to the first pre-folding groove 32. The combination of the pre-folding grooves 32, 34 and the holes 36 jointly create a region along the nominal axis A in which the package 20 is mechanically weakened just enough to allow the lid 24 and the shell 22 to pivot about axis A relative to each other, and allow transitioning of the package 20 between opened and closed states. However, the locally weakened PES material remains sufficiently strong to prevent breaking or tearing of the hinge 30 under normal handling conditions.

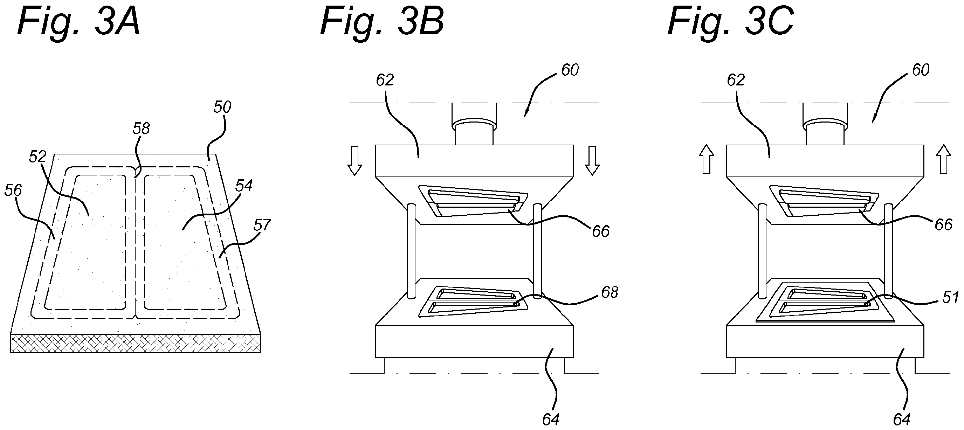

Figure 3a schematically shows a perspective view of a precursor sheet 50 of felt material, which is used for forming the airbag package 20 shown in figures 2a-b. Conceptually, the sheet 50 can be divided into distinct regions 52, 54, 56, 57, 58 that are subjected to different levels of compression and deformation forces, due to the three-dimensional curvature of the moulding parts that are used during press-moulding. In this example, the regions include: a shell portion 52 with an associated rim portion 56, a lid portion 54 with an associated rim portion 57, and a centreline hinge region 58 that connects portions 52 and 56 to portions 54 and 57. The shell portion 52 in the sheet 50 will form the shell 22 in the finalized package 20. Similarly, lid portion 54 will form lid 24, rim portion 56 will form rim 23, rim portion 57 will form rim 25, and hinge region 58 will form hinge 30, respectively.

Figure 3b shows a moulding press 60, which includes two base plates 62, 64 that are moveable relative to each other along a linear trajectory, and a pair of cooperating mould parts 66, 68 that consists essentially of metal and are fixed to the base plates 62, 64. The upper mould part 66 defines a projecting mould shape (male), which corresponds generally to that of the mould cavity (female) formed in the lower mould part 68. The two base plates 62, 64 and mould parts 66, 68 may be translated towards each other by a linear drive (e.g. a piston system), guided along rigid sliding rods, and made to engage such that the male shape of the upper mould part 66 will be received within the female shape of the lower mould part 68. Both the projecting shape of the upper mould part 66 and the moulding cavity in the lower mould part 68 have a trapezoidal peripheral contour, which is symmetric about a centerline, and which divides the part 66 resp. 68 into two separate halves.

Before the precursor sheet 50 is placed inside the press 60, the sheet 50 is integrally heated to a required temperature (e.g. about 200-250°C). Hence, the press 60 does not need to include heating means of its own. The pre-heated sheet of felt material 50 from figure 3a is placed on the lower mould part 68, with the shell and lid portions 52, 54 spanning the two moulding cavities of the lower mould part 68, and the hinge region 58 positioned along the centerline thereof.

Subsequently, the mould parts 66, 68 are pressed together, so that the sheet 50 is urged by the projections of upper part 66 into the cavities of lower part 68, causing the shell and lid portions 52, 54 to plastically deform in normal (i.e. out-of-plane) directions, and relative to the rim portions 56, 57 and hinge region 58. The mould parts 66, 68 are urged further together, to compress the resulting package shape along the normal direction.

The resulting deformed surface shape 51, which is schematically shown in figure 3c, has cavities that largely correspond to the opened configuration of the package 20 shown in figure 2b. After the deformed shape 51 has been removed from mould part 68, the edges of the shape 51 are cut to form the rims 23, 25 in accordance with figures 1-2b.

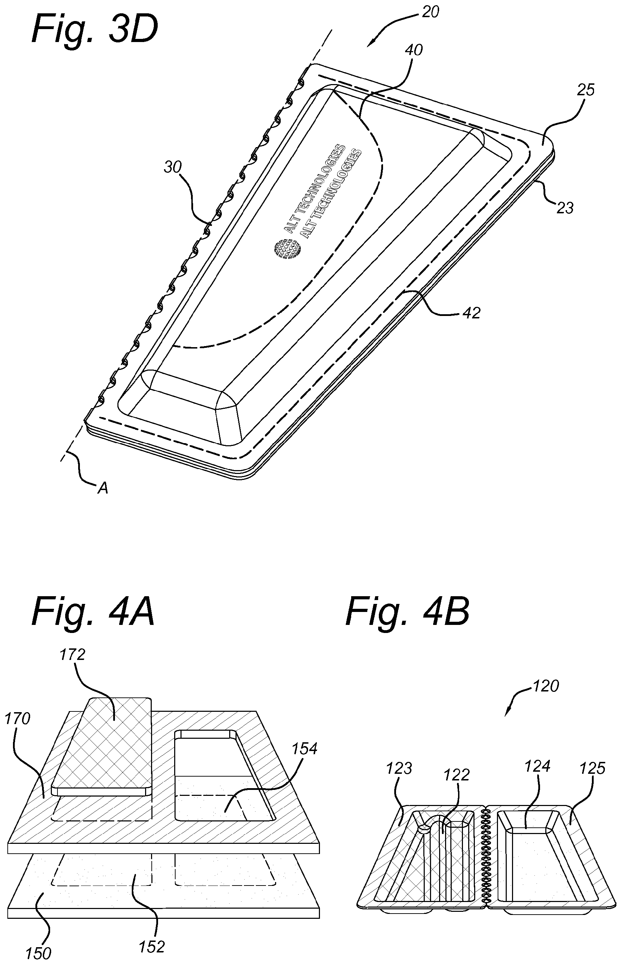

Figure 3d shows that a perforation line 40 may be formed in the lid 24. The package 20 may then be temporarily opened, to receive the folded airbag 12 and the inflator 14 in the inner compartment 26. Figure 3d shows that the package 20 with the airbag 12 and inflator 14 may be rigidly closed by providing stiches 42 through and along the rims 23, 25.

Figure 4b shows another embodiment of an airbag package 120, which is formed as a laminate made from three precursor sheets 150, 170, 172 of felt material. The three sheets 150, 170, 172 are positioned in an overlapping manner, based on the ordering shown in figure 4a, and then pressed together, analogous to the procedure described with reference to figures 3b-c. Features in the precursor sheets 150, 170, 172 and package 120 that have already been described above with reference to the first embodiment (figures 1-2b) may also be present in figures 4a-4b, and will not all be discussed here again. For the discussion with reference to figures 4a-4b, like features are designated with similar reference numerals preceded by 100 to distinguish the embodiments.

In figure 4a, the second sheet 170 defines only a rounded quadrilateral opening, which is essentially congruent to and overlaps/coincides with the lid portion 154 of the first sheet 150. The third sheet 172 forms a rounded quadrilateral with a reduced surface area that is essentially congruent to and overlaps/coincides with the shell portion 152 of the first sheet 150 (and similar region of the second sheet 170). After pressing the three sheets 150, 170, 172 together between the mould parts, the resulting shell 122 forms a triple-layered laminate, the rims 123, 125 form a dual-layered laminate, and the lid 124 remains single-layered.

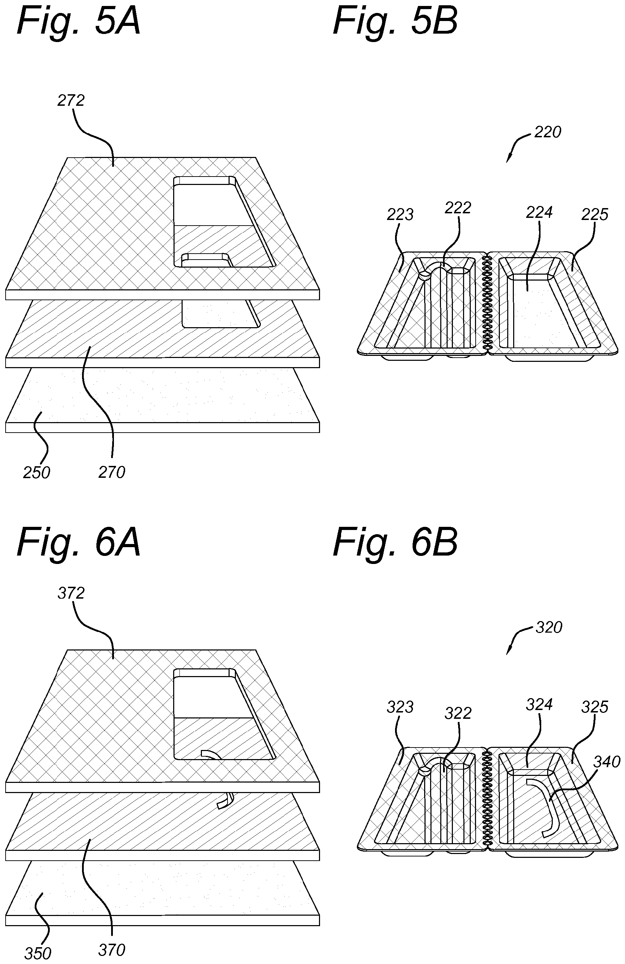

Figure 5a-5b and 6a-6b show two alternative methods of stacking precursor sheets, and the resulting airbag package embodiments 220, 320 obtained after press-moulding. In the embodiment of figures 5a-5b, the shell 222 and rims 223, 225 form a triple-layered laminate, the upstanding sides of the depression in the lid 224 forms a dual-layered laminate, and the floor of the depression in the lid 224 remains single-layered, after the three sheets 250, 270, 272 have been pressed together between the mould parts. By contrast, the package 320 in figure 6b has a single-layered structure only at a curved and narrow weakening line 140 along the lid 324, whereas the rest of the lid 324 is formed as a dual-layered structure.

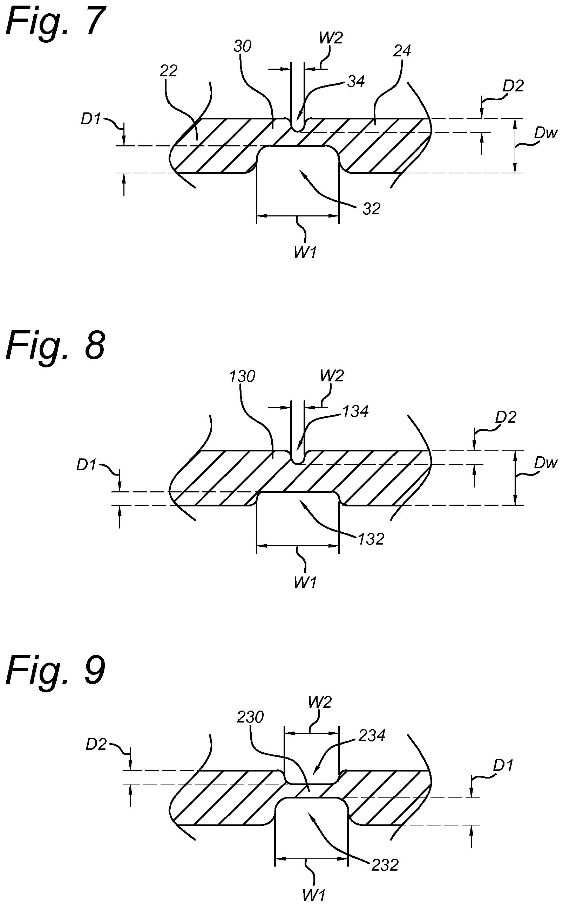

Figures 7-9 schematically show cross-sections of exemplary hinge regions in three distinct airbag packages.

Figure 7 illustrates the hinge regions from figures 2a-b, and shows details of the parallel pre-folding grooves 32, 34 on both opposite sides of the hinge 30. The shell 22 and the lid 24 both have a thickness Dw near the hinge 30 and directly adjacent to the pre-folding grooves 32, 34. The outer pre-folding groove 32 has a groove depth D1 relative to an outer surface of the shell 22 and the lid 24. Similarly, the inner pre-folding groove 34 has a groove depth D2 relative to an inner surface of the shell 22 and the lid 24. In this example, the thickness Dw is approximately 2 millimetres, the depth D1 is approximately 1 millimetre, and the depth D2 is approximately 0.5 millimetres.

Figure 7 further illustrates that the outer pre-folding groove 32 has a groove width W1, and the inner pre-folding groove 34 has a groove width W2 that is smaller than the groove width W1. In this example, the width W1 is approximately 3 millimetres, and the width W2 is approximately 0.5 millimetres.

Figures 8 and 9 show alternative configurations for the hinge, in which the groove dimensions differ from those shown in figure 7. Identical elements are indicated with similar reference numerals, but preceded with (two-)hundred to distinguish the embodiments.

In figure 8, the thickness Dw is approximately 2 millimetres, and the depths D1 and D2 are each approximately equal to 0.5 millimetres. Also here, the width W1 approximately equals 3 millimetres, and the width W2 approximately equals 0.5 millimetres.

In figure 9, the thickness Dw is approximately 2 millimetres, the depth D1 is approximately 1 millimetre, and the depth D2 is approximately 0.5 millimetres. In this case, the width W1 equals 2.65 millimetres, and the width W2 is approximately 2 millimetres.

In each of figures 8-9, the outer groove depth D1 is equal to or larger than the inner groove depth D1, the outer groove width W1 is larger than the inner groove width W2, and the outer groove width W1 is also larger than the thickness Dw i.e. D1 ≥ D2; W1 > W2; and W1 > Dw. In addition, the total depth D1+D2 of the two grooves 32, 34 together complies with ½·Dw ≤ D1+D2 ≤ ¾·Dw. Furthermore, for each of the grooves 32, 34, the respective groove depths Di and widths Wi (i = 1, 2) comply with Di ≤ Wi ≤ 3·Di.

The embodiments of the present disclosure are not limited to the exemplary embodiments described herein above and should be construed as including all modifications, changes, equivalent devices and methods, and/or alternative embodiments of the present disclosure. For the purpose of determining the extent of protection conferred by the claims of this document, due account shall be taken of any element which is equivalent to an element specified in the claims.

For instance, the above exemplary embodiments involved a side airbag configuration. However, it should be understood that features according to the present invention can be applied in other side airbag types, or to package airbags of other types.

Further, in the embodiment shown in figure 3d, the package with airbag was closed and fixed along the rims by stitches. In alternative embodiments, the rims may be fixed to each other using ultrasonic welding techniques, or may be provided with cooperating slits and tabs, wherein each tab on the first rim is configured to be inserted in a slit provided in the other rim, which is directly opposite to the first rim when the package is in the closed state.

### List of Reference Symbols

Similar reference numbers that have been used in the description to indicate similar elements (but differing only in the hundreds) have been omitted from the list below, but should be considered implicitly included.
- 10: airbag unit
- 12: airbag
- 14: inflator
- 20: package
- 22: shell
- 23: rim
- 24: lid (or second shell)
- 25: second rim
- 26: inner compartment
- 28: further compartment
- 30: hinge
- 32: pre-folding groove (outer groove)
- 34: further pre-folding groove (inner groove)
- 36: through-hole
- 38: edge
- 40: perforation line
- 42: closing means (e.g. stitches)
- 50: precursor sheet
- 51: deformed sheet
- 52: shell portion
- 54: lid portion (or second shell portion)
- 56: rim portion
- 57: second rim portion
- 58: hinge region
- 60: moulding press
- 62: first press member
- 64: second press member
- 66: first mould part
- 68: second mould part
- 80: vehicle
- 82: seat
- 170: second precursor sheet
- 172: third precursor sheet
- A: nominal pivot axis
- D1: groove depth
- D2: further groove depth
- Dw: wall thickness
- W1: groove width
- W2: further groove width

## Claims

1. A method for manufacturing an airbag package (20), wherein the method comprises:
providing a sheet (50) of precursor material that consists essentially of felt, for instance polyester needle felt, and which is plastically deformable when subjected to heat and/or pressure;
placing the sheet between mould parts (66, 68) of a moulding press (60);
forming a shell (22) that defines an inner compartment (26) for accommodating a rolled-up and/or folded airbag (12);
forming a lid (24) configured to engage the shell and to cover said compartment;
forming a hinge (30) that interconnects the shell and the lid along a nominal axis (A), and which allows the lid to pivot about said axis and relative to the shell between opened and closed states;
wherein the method comprises subjecting the sheet to pressure, thereby integrally forming the shell, the lid, and the hinge, into a continuous and self-supporting three-dimensional shape.

2. The method according to claim 1, further comprising:
providing a second sheet (170, 172) of felt precursor material that is plastically deformable when subjected to predetermined minimum levels of heat and/or pressure, and positioning the sheet (150) and second sheet in an at least partially overlapping manner between the mould parts (66, 68), and
simultaneously subjecting the sheet and the second sheet to pressure, so that at least part of the three-dimensional shape obtains a laminated structure.

3. The method according to claim 2, further comprising:
positioning the second sheet (170, 172) in an overlapping manner with a shell portion (152) of the sheet (150) between the mould parts, so that the shell (122) obtains a laminated structure when the sheet and second sheet are subjected to pressure.

4. The method according to claim 3, further comprising:
positioning the second sheet (170, 172) in an overlapping manner with a rim portion (156) and a second rim portion (157) of the sheet (150) between the mould parts, so that the rim (123) and second rim (125) obtain a laminated structure when the sheet and second sheet are subjected to pressure.

5. The method according to claim 4, further comprising:
positioning the second sheet (170, 172) in an overlapping manner with the sheet (150) between the mould parts while leaving at least a lid portion (154) of the sheet uncovered, so that at least part of the lid (124) retains a single-layered structure when the sheet and second sheet are subjected to pressure.

6. The method according to any one of claims 1-5, further comprising:
after subjecting the sheet (50) to pressure and forming the hinge (30), providing a plurality of though-holes (36) in a linear sequence along the axis (A), for instance by cutting, punching, or milling, and optionally comprising forming the through holes (36) with essentially identical sizes, shapes, and mutual distances along the axis (A).

7. The method according to claim 6, further comprising:
while subjecting the sheet (50) to pressure, forming a pre-folding groove (32) in the sheet, wherein the pre-folding groove is located on one surface side of the sheet, and extends along and parallel with the axis (A), and optionally comprising forming a further pre-folding groove (34) in the sheet, wherein the further pre-folding groove is located on an opposite surface side of the sheet, and extends along and parallel with the axis (A).

8. An airbag package (20), comprising:
- a shell (22) defining an inner compartment (26) for accommodating a rolled-up and/or folded airbag (12);
- a lid (24) configured to engage the shell along an edge so that the lid covers said compartment;
- a hinge (30) interconnecting the shell and the lid along a nominal axis (A), and allowing the lid to pivot about said axis and relative to the shell between opened and closed states;
wherein the shell, the lid, and the hinge are interconnected and define a unitary self-supporting three-dimensional shape, which is formed from a sheet (50) of pressed felt, for instance polyester needle felt.

9. The airbag package (120) according to claim 8, wherein at least part of the three-dimensional shape has a laminated structure formed by the sheet (150) and by a second sheet (170, 172) of pressed felt that at least partially overlaps the sheet (150).

10. The airbag package (20) according to claim 9, wherein at least one of the shell (122), a rim (123) of the shell, and a second rim (125) of the lid (124), has a laminated structure formed by overlapping portions of the sheet (150) and the second sheet (170, 172), and optionally wherein at least part of the lid (124) retains a single-layered structure that is formed only by the sheet (150).

11. The airbag package (20) according to any one of claims 8-10, further comprising a plurality of though holes (36) arranged in a linear sequence along the axis (A) and the hinge (30), wherein the through holes (36) preferably have essentially identical sizes, shapes, and mutual distances along the axis (A).

12. The airbag package (20) according to any one of claims 8-11, further comprising a pre-folding groove (32) located on one surface side of the hinge (30), and optionally a further pre-folding groove (34) located on an opposite surface side of the hinge (30), said pre-folding groove or grooves (32, 34) extending along and parallel with the axis (A).

13. The airbag package (20) according to claim 12, wherein the shell (22) and the lid (24) both have a thickness (Dw) near and along the pre-folding grooves (32, 34), wherein the pre-folding groove (32) has a groove depth (D1) relative to an outer surface of the shell and lid, wherein the further pre-folding groove (34) has a further groove depth (D2) relative to an inner surface of the shell and lid, and wherein a sum of the groove depths complies with ½·Dw ≤ D1+D2 ≤ ¾·Dw.

14. The airbag package (20) according to claim 12 or 13, wherein the pre-folding groove (32) has a groove width (W1) and a groove depth (D1) relative to an outer surface of the shell and lid, and wherein the groove width and depth comply with D1 ≤ W1 ≤ 3·D1.

15. An airbag unit (10) for a motor vehicle safety device, the unit comprising:
an inflatable airbag (12) formed of a flexible material and provided in a rolled and/or folded body;
an inflator device (14) for inflating the airbag (12), and
a package (20) with an inner compartment (26) that accommodates the airbag, wherein the package is and airbag package according to any one of claims 8-14, or is made by the method according to any one of claims 1-7.

16. A vehicle (80) comprising an airbag unit (10) according to claim 15.

## Patentansprüche

1. Verfahren zum Herstellen eines Airbagpakets (20), wobei das Verfahren umfasst:
Bereitstellen eines Bogens (50) aus Vorstufenmaterial,
das im Wesentlichen aus Filz, zum Beispiel Polyester-Nadelfilz, besteht und das plastisch verformbar ist,
wenn es Wärme und/oder Druck ausgesetzt wird;
Platzieren des Bogens zwischen Formteilen (66, 68) einer Formpresse (60);
Bilden einer Schale (22), die eine innere Kammer (26) zum Unterbringen eines aufgerollten und/oder gefalteten Airbags (12) definiert;
Bilden eines Deckels (24), der eingerichtet ist, um mit der Schale in Eingriff zu stehen und um die Kammer abzudecken;
Bilden eines Scharniers (30), das die Schale und den Deckel entlang einer Sollachse (A) miteinander verbindet und das ermöglicht, dass der Deckel um die Achse und relativ zu der Schale zwischen einem geöffneten und einem geschlossenen Zustand schwenkt;
wobei das Verfahren ein Aussetzen des Bogens einem Druck umfasst, wodurch die Schale, der Deckel und das Scharnier einstückig zu einer kontinuierlichen und selbsttragenden dreidimensionalen Form gebildet werden.

2. Verfahren nach Anspruch 1, ferner umfassend:
Bereitstellen eines zweiten Bogens (170, 172) aus Filzvorstufenmaterial, das plastisch verformbar ist, wenn es vorbestimmten Mindestbeträgen von Wärme und/oder Druck ausgesetzt wird, und Positionieren des Bogens (150) und des zweiten Bogens in einer zumindest teilweise überlappenden Weise zwischen den Formteilen (66, 68), und
gleichzeitiges Aussetzen des Bogens und des zweiten Bogens einem Druck, sodass zumindest ein Teil der dreidimensionalen Form eine laminierte Struktur erhält.

3. Verfahren nach Anspruch 2, ferner umfassend:
Positionieren des zweiten Bogens (170, 172) in einer überlappenden Weise mit einem Schalenabschnitt (152) des Bogens (150) zwischen den Formteilen, sodass die Schale (122) eine laminierte Struktur erhält, wenn der Bogen und der zweite Bogen Druck ausgesetzt werden.

4. Verfahren nach Anspruch 3, ferner umfassend:
Positionieren des zweiten Bogens (170, 172) in einer überlappenden Weise mit einem Randabschnitt (156) und
einem zweiten Randabschnitt (157) des Bogens (150) zwischen den Formteilen, sodass der Rand (123) und der zweite Rand (125) eine laminierte Struktur erhalten,
wenn der Bogen und der zweite Bogen Druck ausgesetzt werden.

5. Verfahren nach Anspruch 4, ferner umfassend:
Positionieren des zweiten Bogens (170, 172) in einer überlappenden Weise mit dem Bogen (150) zwischen den Formteilen, während zumindest ein Deckelabschnitt (154) des Bogens unbedeckt gelassen wird, sodass zumindest ein Teil des Deckels (124) eine einschichtige Struktur behält, wenn der Bogen und der zweite Bogen Druck ausgesetzt werden.

6. Verfahren nach einem der Ansprüche 1-5, ferner umfassend:
nach dem Aussetzen des Bogens (50) einem Druck und Bilden des Scharniers (30), Bereitstellen mehrerer Durchgangslöcher (36) in einer linearen Abfolge entlang der Achse (A), zum Beispiel durch Schneiden, Stanzen oder Fräsen, und optional umfassend Bilden der Durchgangslöcher (36) mit im Wesentlichen identischen Größen, Formen und Abständen voneinander entlang der Achse (A).

7. Verfahren nach Anspruch 6, ferner umfassend:
während des Aussetzens des Bogens (50) einem Druck, Bilden einer Vorfalz-Nut (32) in dem Bogen, wobei sich die Vorfalz-Nut auf einer Flächenseite des Bogens befindet und entlang sowie parallel zu der Achse (A) erstreckt, und optional umfassend Bilden einer weiteren Vorfalz-Nut (34) in dem Bogen, wobei sich die weitere Vorfalz-Nut auf einer gegenüberliegenden Flächenseite des Bogens befindet und entlang sowie parallel zu der Achse (A) erstreckt.

8. Airbagpaket (20), umfassend:
- eine Schale (22), die eine innere Kammer (26) zum Unterbringen eines aufgerollten und/oder gefalteten Airbags (12) definiert;
- einen Deckel (24), der eingerichtet ist, um mit der Schale entlang einer Kante in Eingriff zu stehen, sodass der Deckel die Kammer abdeckt;
- ein Scharnier (30), das die Schale und den Deckel entlang einer Sollachse (A) miteinander verbindet und das ermöglicht, dass der Deckel um die Achse und relativ zu der Schale zwischen einem geöffneten und einem geschlossenen Zustand schwenkt;
wobei die Schale, der Deckel und das Scharnier miteinander verbunden sind und eine einheitliche selbsttragende dreidimensionale Form definieren, die aus einem Bogen (50) aus gepresstem Filz, zum Beispiel Polyester-Nadelfilz, gebildet ist.

9. Airbagpaket (120) nach Anspruch 8, wobei zumindest ein Teil der dreidimensionalen Form eine laminierte Struktur aufweist, die durch den Bogen (150) und durch einen zweiten Bogen (170, 172), welcher den Bogen (150) zumindest teilweise überlappt, aus gepresstem Filz gebildet ist.

10. Airbagpaket (20) nach Anspruch 9, wobei die Schale (122) und/oder ein Rand (123) der Schale und/oder ein zweiter Rand (125) des Deckels (124) eine laminierte Struktur aufweist, die durch überlappende Abschnitte des Bogens (150) und des zweiten Bogens (170, 172) gebildet ist, und wobei optional zumindest ein Teil des Deckels (124) eine einschichtige Struktur behält, die nur durch den Bogen (150) gebildet ist.

11. Airbagpaket (20) nach einem der Ansprüche 8-10, ferner umfassend mehrere Durchgangslöcher (36), die in einer linearen Abfolge entlang der Achse (A) und des Scharniers (30) angeordnet sind, wobei die Durchgangslöcher (36) vorzugsweise im Wesentlichen identische Größen, Formen und Abstände voneinander entlang der Achse (A) aufweisen.

12. Airbagpaket (20) nach einem der Ansprüche 8-11, ferner umfassend eine Vorfalz-Nut (32), die sich auf einer Flächenseite des Scharniers (30) befindet, und optional eine weitere Vorfalz-Nut (34), die sich auf einer gegenüberliegenden Flächenseite des Scharniers (30) befindet, wobei sich die Vorfalz-Nut oder -Nuten (32, 34) entlang sowie parallel zu der Achse (A) erstrecken.

13. Airbagpaket (20) nach Anspruch 12, wobei die Schale (22) und der Deckel (24) beide eine Dicke (Dw) nahe und entlang der Vorfalz-Nuten (32, 34) aufweisen, wobei die Vorfalz-Nut (32) eine Nuttiefe (D1) relativ zu einer äußeren Fläche der Schale und des Deckels aufweist, wobei die weitere Vorfalz-Nut (34) eine weitere Nuttiefe (D2) relativ zu einer inneren Fläche der Schale und des Deckels aufweist, und wobei eine Summe der Nuttiefen ½ · Dw ≤ D1 + D2 ≤ ¾ · Dw erfüllt.

14. Airbagpaket (20) nach Anspruch 12 oder 13, wobei die Vorfalz-Nut (32) eine Nutbreite (W1) und eine Nuttiefe (D1) relativ zu einer äußeren Fläche der Schale und des Deckels aufweist, und wobei die Nutbreite und -tiefe D1 ≤ W1 ≤ 3 · D1 erfüllen.

15. Airbageinheit (10) für eine Kraftfahrzeug-Sicherheitsvorrichtung, wobei die Einheit umfasst:
einen aufblasbaren Airbag (12), der aus einem flexiblen Material gebildet und in einem gerollten und/oder gefalteten Körper bereitgestellt ist;
eine Aufblasvorrichtung (14) zum Aufblasen des Airbags (12), und
ein Paket (20) mit einer inneren Kammer (26), die den Airbag unterbringt, wobei das Paket ein Airbagpaket nach einem der Ansprüche 8-14 ist oder durch das Verfahren nach einem der Ansprüche 1-7 hergestellt wird.

16. Fahrzeug (80), umfassend eine Airbageinheit (10) nach Anspruch 15.

## Revendications

1. Procédé de fabrication d'un paquet de coussin d'air de sécurité (20), dans lequel le procédé comprend les étapes consistant à :
fournir une feuille (50) de matériau précurseur qui est essentiellement constituée de feutre, par exemple de feutre aiguilleté de polyester, et qui est plastiquement déformable lorsqu'elle est soumise à de la chaleur et/ou à la pression ;
placer la feuille entre des parties de moule (66, 68) d'une presse à mouler (60) ;
former une coque (22) qui définit un compartiment intérieur (26) pour recevoir un coussin d'air de sécurité enroulé et/ou plié (12) ;
former un couvercle (24) configuré pour venir en prise avec la coque et pour recouvrir ledit compartiment ;
former une articulation (30) qui relie la coque et le couvercle le long d'un axe nominal (A), et qui permet au couvercle de pivoter autour dudit axe et par rapport à la coque entre des états ouvert et fermé ;
dans lequel le procédé consiste à soumettre la feuille à une pression, en formant ainsi d'un seul tenant la coque, le couvercle et l'articulation, en une forme tridimensionnelle continue et autoportante.

2. Procédé selon la revendication 1, comprenant en outre les étapes consistant à :
fournir une seconde feuille (170, 172) de matériau précurseur de feutre qui est plastiquement déformable lorsqu'elle est soumise à des niveaux minimaux prédéterminés de chaleur et/ou de pression, et positionner la feuille (150) et la seconde feuille d'une manière au moins partiellement en chevauchement entre les parties de moule (66, 68), et
soumettre simultanément la feuille et la seconde feuille à une pression, de sorte qu'au moins une partie de la forme tridimensionnelle obtienne une structure stratifiée.

3. Procédé selon la revendication 2, comprenant en outre l'étape consistant à :
positionner la seconde feuille (170, 172) d'une manière en chevauchement avec une partie d'enveloppe (152) de la feuille (150) entre les parties de moule, de sorte que la coque (122) obtient une structure stratifiée lorsque la feuille et la seconde feuille sont soumises à une pression.

4. Procédé selon la revendication 3, comprenant en outre l'étape consistant à :
positionner la seconde feuille (170, 172) d'une manière en chevauchement avec une partie de rebord (156) et une seconde partie de rebord (157) de la feuille (150) entre les parties de moule, de sorte que le rebord (123) et le second rebord (125) obtiennent une structure stratifiée lorsque la feuille et la seconde feuille sont soumises à une pression.

5. Procédé selon la revendication 4, comprenant en outre l'étape consistant à :
positionner la seconde feuille (170, 172) d'une manière en chevauchement avec la feuille (150) entre les parties de moule tout en laissant au moins une partie de couvercle (154) de la feuille non recouverte, de sorte qu'au moins une partie du couvercle (124) conserve une structure monocouche lorsque la feuille et la seconde feuille sont soumises à une pression.

6. Procédé selon l'une quelconque des revendications 1 à 5, comprenant en outre :
après avoir soumis la feuille (50) à une pression et formé la articulation (30), fournir une pluralité de trous traversants (36) dans une séquence linéaire le long de l'axe (A), par exemple par découpe, poinçonnage ou fraisage, et comprenant éventuellement une formation des trous traversants (36) avec des tailles, des formes et des distances mutuelles sensiblement identiques le long de l'axe (A).

7. Procédé selon la revendication 6, comprenant en outre l'étape consistant à :
tout en soumettant la feuille (50) à une pression, former une rainure de pré-pliage (32) dans la feuille, dans lequel la rainure de pré-pliage est située sur un côté de surface de la feuille, et s'étend le long de et parallèlement à l'axe (A), et comprenant éventuellement l'étape consistant à former une autre rainure de pré-pliage (34) dans la feuille, dans lequel l'autre rainure de pré-pliage est située sur un côté de surface opposé de la feuille, et s'étend le long de et parallèlement à l'axe (A).

8. Paquet de coussin d'air de sécurité (20), comprenant :
- une coque (22) définissant un compartiment intérieur (26) pour recevoir un coussin d'air de sécurité enroulé et/ou plié (12) ;
- un couvercle (24) configuré pour venir en prise avec la coque le long d'un bord de sorte que le couvercle recouvre ledit compartiment ;
- une articulation (30) reliant la coque et le couvercle le long d'un axe nominal (A), et permettant au couvercle de pivoter autour dudit axe et par rapport à la coque entre des états ouvert et fermé ;
dans lequel la coque, le couvercle et l'articulation sont interconnectés et définissent une forme tridimensionnelle autoportante unitaire, qui est formée à partir d'une feuille (50) de feutre pressé, par exemple de feutre aiguilleté de polyester.

9. Paquet de coussin d'air de sécurité (120) selon la revendication 8, dans lequel au moins une partie de la forme tridimensionnelle a une structure stratifiée formée par la feuille (150) et par une seconde feuille (170, 172) de feutre pressé qui chevauche au moins partiellement la feuille (150).

10. Paquet de coussin d'air de sécurité (20) selon la revendication 9, dans lequel au moins l'une de la coque (122), d'un rebord (123) de la coque et d'un second rebord (125) du couvercle (124) a une structure stratifiée formée par des parties en chevauchement de la feuille (150) et de la seconde feuille (170, 172), et facultativement dans lequel au moins une partie du couvercle (124) retient une structure monocouche qui est formée uniquement par la feuille (150).

11. Paquet de coussin de sécurité gonflable (20) selon l'une quelconque des revendications 8 à 10, comprenant en outre une pluralité de trous traversants (36) agencés en une séquence linéaire le long de l'axe (A) et de l'articulation (30), dans lequel les trous traversants (36) ont de préférence des tailles, des formes et des distances mutuelles sensiblement identiques le long de l'axe (A).

12. Paquet de coussin d'air de sécurité (20) selon l'une quelconque des revendications 8 à 11, comprenant en outre une rainure de pré-pliage (32) située sur un côté de surface de l'articulation (30), et facultativement une autre rainure de pré-pliage (34) située sur un côté de surface opposé de l'articulation (30), ladite rainure ou lesdites rainures de pré-pliage (32, 34) s'étendant le long de et parallèlement à l'axe (A).

13. Paquet de coussin de sécurité gonflable (20) selon la revendication 12, dans lequel la coque (22) et le couvercle (24) ont tous deux une épaisseur (Dw) à proximité et le long des rainures de pré-pliage (32, 34), dans lequel la rainure de pré-pliage (32) a une profondeur de rainure (D1) par rapport à une surface extérieure de la coque et du couvercle, dans lequel l'autre rainure de pré-pliage (34) a une profondeur de rainure supplémentaire (D2) par rapport à une surface intérieure de la coque et du couvercle, et dans lequel une somme des profondeurs de rainure est conforme à ½ Dw ≤ D1 + D2 ≤ ¾ Dw.

14. Paquet de coussin d'air de sécurité (20) selon la revendication 12 ou 13, dans lequel la rainure de pré-pliage (32) a une largeur de rainure (W1) et une profondeur de rainure (D1) par rapport à une surface extérieure de la coque et du couvercle, et dans lequel la largeur et la profondeur de rainure sont conformes à D1 ≤ W1 ≤ 3 D1.

15. Unité de coussin d'air de sécurité (10) pour un dispositif de sécurité de véhicule automobile, l'unité comprenant :
un coussin d'air de sécurité gonflable (12) formé d'un matériau flexible et disposé en un corps enroulé et/ou plié ;
un dispositif de gonflage (14) pour gonfler le coussin d'air de sécurité (12), et
un paquet (20) avec un compartiment intérieur (26) qui reçoit le coussin d'air de sécurité, dans lequel le paquet est un paquet de coussin d'air de sécurité selon l'une quelconque des revendications 8 à 14, ou est fabriqué par le procédé selon l'une quelconque des revendications 1 à 7.

16. Véhicule (80) comprenant une unité de coussin d'air de sécurité de sécurité (10) selon la revendication 15.
